(19) Europäisches Patentamt / European Patent Office / Office européen des brevets

(11) **EP 3 564 521 A1**

(12) **EUROPEAN PATENT APPLICATION**
published in accordance with Art. 153(4) EPC

(43) Date of publication:
06.11.2019 Bulletin 2019/45

(21) Application number: 18747509.0

(22) Date of filing: 31.01.2018

(51) Int Cl.:
F02N 11/00 (2006.01)   B60K 6/36 (2007.10)
B60K 6/40 (2007.10)   B60K 6/485 (2007.10)
B60K 6/54 (2007.10)   F02N 5/02 (2006.01)
F02N 15/02 (2006.01)

(86) International application number:
PCT/JP2018/003143

(87) International publication number:
WO 2018/143247 (09.08.2018 Gazette 2018/32)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 06.02.2017 JP 2017019795

(71) Applicant: Exedy Corporation
Neyagawa-shi, Osaka 572-8570 (JP)

(72) Inventors:
• KATSURA, Hitoshi
  Neyagawa-shi
  Osaka 572-8570 (JP)
• KITAMURA, Taichi
  Neyagawa-shi
  Osaka 572-8570 (JP)

(74) Representative: KASTEL Patentanwälte PartG
mbB
St.-Cajetan-Straße 41
81669 München (DE)

(54) **INTERNAL COMBUSTION ENGINE START ASSISTANCE MECHANISM**

(57) An internal combustion engine start assist mechanism includes an elastic member (3) that is attached to between a first support portion (1b) of a starting apparatus side member (1) and a second support portion (2b) of an internal combustion engine side member (2) along an internal combustion engine rotation direction and has a biasing force for applying a bias in the internal combustion engine rotation direction (10), a stopper portion (2c) of the internal combustion engine side member, and a contact portion (1c) of the starting apparatus side member disposed behind the stopper portion in the internal combustion engine rotation direction, the contact portion being capable of forming a gap (12) relative to the stopper portion when the starting apparatus side member rotates in a direction opposite to the internal combustion engine rotation direction and coming into contact with the stopper portion when the starting apparatus side member rotates in the internal combustion engine rotation direction. When the starting apparatus side member rotates in the internal combustion engine rotation direction after the rotation in the opposite direction, the contact portion is brought into contact with the stopper portion, and a combination of the rotation of the starting apparatus side member with rotation caused by the biasing force of the elastic member causes the starting apparatus side member to rotate integrally with the internal combustion engine side member.

Fig.1A

**Description**

TECHNICAL FIELD

The present invention relates to an internal combustion engine start assist mechanism applicable to, for example, a power transmitting apparatus with rotary electrical machine that integrates a power generating function and an engine start function of a vehicle's alternator and a vehicle's starter motor.

BACKGROUND ART

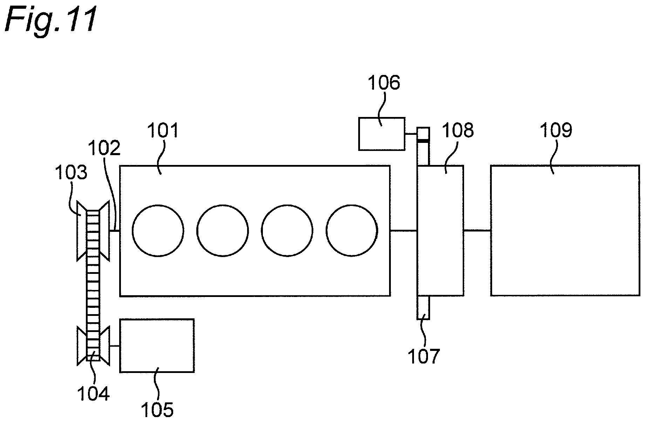

Conventionally, as a power generating apparatus for a vehicle, as shown in Fig. 11, an alternator 105 connected to a pulley 103 provided at a crankshaft end 102 of an internal combustion engine 101 via a V-belt 104 is known.

Further, an apparatus in which the alternator 105 is additionally provided with a driving function to be capable of starting an internal combustion engine in a warm state (after a warm-up) (refer to integrated starter generators (ISGs) disclosed in PTLs 1 to 3) and further performing a driving force assist while a vehicle is travelling, or the like is known.

CITATION LIST

PATENT LITERATURE

    PTL 1: JP 4782348 B2
    PTL 2: JP 4787242 B2
    PTL 3: JP 2009-508464 A

SUMMARY OF INVENTION

TECHNICAL PROBLEM

However, the method for starting an internal combustion engine described above may fail to start the engine in a cold state. This is because in the cold state, for example, a decrease in temperature of a lubricating oil in the internal combustion engine causes increases in viscosity of the lubricating oil and in agitating resistance during startup, and a decrease in friction coefficient between the V-belt 104 and the pulley 103 causes slippage to occur between the V-belt 104 and the pulley 103, thereby preventing a rotational driving force of the alternator 105 from being transmitted to the internal combustion engine 101.

To address such a problem, a vehicle equipped with such an apparatus includes, without exception, a starter motor 106 in addition to the alternator 105 for the cold start of an internal combustion engine. Note that, in Fig. 11, a ring gear is denoted by 107, a starting apparatus such as a torque converter is denoted by 108, and a transmission is denoted by 109.

Accordingly, an object of the present invention, having been conceived to solve the problem, is to provide an internal combustion engine start assist mechanism in which an internal combustion engine and a starting apparatus are coupled with each other without a V-belt and a pulley to enable a reliable start even in a cold state, specifically, under a condition such as at an extremely low temperature ranging from, for example, -20°C to -30°C.

SOLUTION TO PROBLEM

According to one aspect of the present invention, there is provided an internal combustion engine start assist mechanism comprising:

    an elastic member that is attached to between a first support portion of a starting apparatus side member and a second support portion of an internal combustion engine side member respectively positioned along an internal combustion engine rotation direction and has a biasing force for applying a bias in the internal combustion engine rotation direction;
    a stopper portion disposed on the internal combustion engine side member that rotates integrally with an output shaft of an internal combustion engine; and
    a contact portion of the starting apparatus side member disposed behind the stopper portion of the internal combustion engine side member in the internal combustion engine rotation direction, the contact portion being capable of forming a gap relative to the stopper portion of the internal combustion engine side member when the starting apparatus side member rotates in a direction opposite to the internal combustion engine rotation direction, and the contact portion coming into contact with the stopper portion of the internal combustion engine side member when the starting apparatus side member rotates in the internal combustion engine rotation direction,
    when the starting apparatus side member rotates in the direction opposite to the internal combustion engine rotation direction by a predetermined angle to temporally contract the elastic member and then rotating in the internal combustion engine rotation direction, the contact portion of the starting apparatus side member being brought into contact with the stopper portion of the internal combustion engine side member, and a combination of the rotation of the starting apparatus side member in the internal combustion engine rotation direction with rotation in the internal combustion engine rotation direction caused by the biasing force of the elastic member causing the starting apparatus side member to rotate integrally with the internal combustion engine side member in the internal combustion engine rotation direction.

ADVANTAGEOUS EFFECTS OF INVENTION

According to the aspect of the present invention, the relative gap and the elastic member are arranged between the starting apparatus side member connected to a starting apparatus and the internal combustion engine side member connected to the internal combustion engine along the rotation direction, and after rotation of the starting apparatus side member in a direction opposite to a start rotation direction forms a gap between the starting apparatus side member and the internal combustion engine side member to temporally contract the elastic member, rotation of the starting apparatus side member in the start rotation direction generates torque equal to or greater than static torque of the starting apparatus by using torque generated by the biasing force of the elastic member to enable the internal combustion engine to start. As a result, it is possible to reliably transmit, without a V-belt and a pulley, a rotational driving force of the starting apparatus to the internal combustion engine even in a cold state, specifically, under a condition such as at an extremely low temperature ranging from, for example, -20°C to -30°C, and reliably start the internal combustion engine in the cold state.

BRIEF DESCRIPTION OF DRAWINGS

Fig. 1A is a front view showing an entire circumference of an internal combustion engine start assist mechanism according to a first embodiment of the present invention;
Fig. 1B is an explanatory diagram showing a layout of the internal combustion engine start assist mechanism according to the first embodiment and is a cross-sectional view of the internal combustion engine start assist mechanism that results from rotating the front view of Fig. 1A by 45°;
Fig. 2 is a partially enlarged front view of the internal combustion engine start assist mechanism;
Fig. 3 is a partial state explanatory diagram of the internal combustion engine start assist mechanism in an initial position state;
Fig. 4 is a partial state explanatory diagram of the internal combustion engine start assist mechanism in a state where a twist starts;
Fig. 5 is a partial state explanatory diagram of the internal combustion engine start assist mechanism in a state where the twist has been further made from the state showing in Fig. 4;
Fig. 6 is a schematic operation time chart of the internal combustion engine start assist mechanism;
Fig. 7 is an explanatory diagram of a modification of the first embodiment configured with a leaf spring;
Fig. 8A is an explanatory diagram of a modification of the first embodiment configured with a cylinder and a piston, showing a state where a compressive fluid is sealed in, and an internal pressure is low in a stretched state;
Fig. 8B is an explanatory diagram of the modification that is the same as that in shown in Fig. 8A, showing a state where the compressive fluid is sealed in, and the internal pressure is increased in a contracted state;
Fig. 9 is an explanatory diagram of a modification of the first embodiment configured with an accordion spring;
Fig. 10 is an explanatory diagram of a modification of the first embodiment configured with a tension spring; and
Fig. 11 is an explanatory diagram showing a relation among a conventional internal combustion engine, starter motor, and alternator.

DESCRIPTION OF EMBODIMENTS

Hereinafter, a first embodiment of the present invention will be described in detail with reference to the drawings. Note that, in description of each embodiment, the same components or portions are denoted by the same reference numeral, and redundant description will be omitted.

<First embodiment>

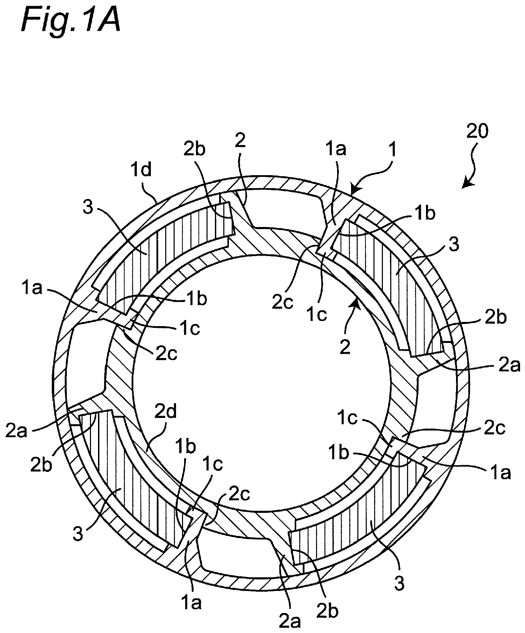

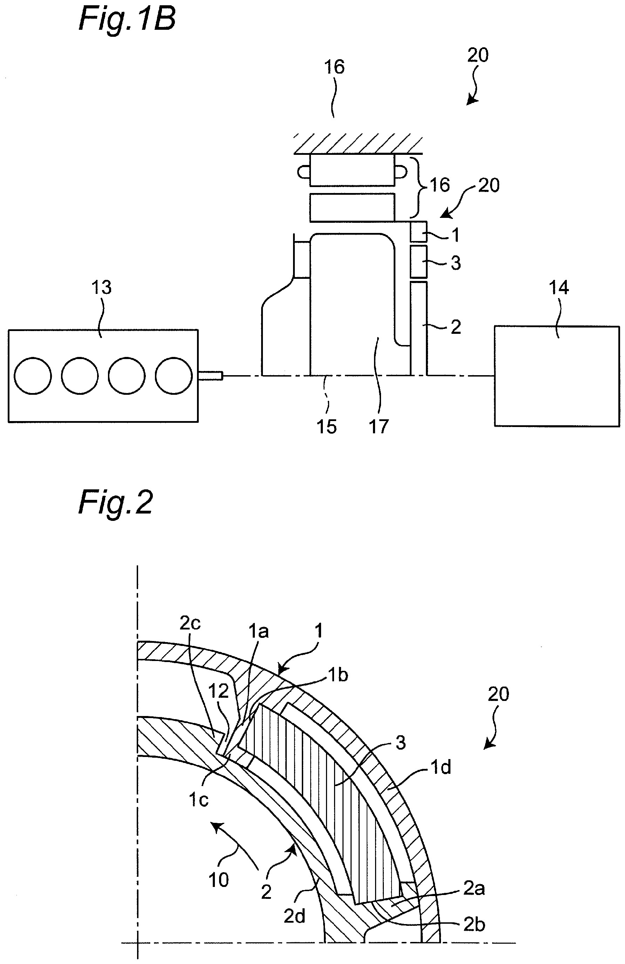

As shown in Figs. 1A and 1B, an internal combustion engine start assist mechanism 20 according to the first embodiment of the present invention is configured to obtain a torque and engine start. In a system for starting an internal combustion engine, i.e., an engine 13, using a rotary electrical machine 16 as an example of a starting apparatus, the torque is equal to or greater than static torque of the rotary electrical machine 16 using a gap 12 provided between the rotary electrical machine 16 and the engine 13, the gap 12 in which rotation directions are relative to each other, and a bias applied by an elastic member 3. The engine start means to start the engine under a condition such as at an extremely low temperature ranging from, for example, -20°C to -30°C where required torque increases and the start of the engine accordingly becomes difficult.

A target to which such the internal combustion engine start assist mechanism 20 is applied includes a power transmitting apparatus with rotary electrical machine.

An example of the power transmitting apparatus with rotary electrical machine has a configuration in which a power transmitting apparatus 17 such as a clutch or a torque converter is combined with the rotary electrical machine 16 to integrate respective functions of an integrated starter generator (ISG) and a starter motor, thereby bringing about advantages in terms of cost and space. Incorporating the internal combustion engine start assist mechanism 20 into the configuration enables a rotational driving force of the rotary electrical machine 16 to be reliably transmitted to the engine 13 even in a cold state, and thus enables a reliable start of the engine 13 in the cold state.

Furthermore, in the embodiment of the present invention, when the rotary electrical machine 16 is disposed in combination with the power transmitting apparatus 17, a power generating function of an alternator and an engine start function of a starter motor are integrated to enable only the rotary electrical machine 16 to perform both the functions, resulting in reducing the cost and space.

Hereinafter, the internal combustion engine start assist mechanism 20 applicable to such a configuration will be described in detail.

The internal combustion engine start assist mechanism 20 includes elastic members 3, stopper portions 2c of an internal combustion engine side member 2, and contact portions 1c of a starting apparatus side member 1.

The starting apparatus side member 1 is connected to a starting apparatus, i.e., the rotary electrical machine 16 and transmits torque at startup from the starting apparatus toward the internal combustion engine.

The internal combustion engine side member 2 is a member that is connected to an output shaft 15 of the internal combustion engine, i.e., the engine 13 and rotates integrally with the output shaft 15 of the engine 13. Examples of the internal combustion engine side member 2 may include a member disposed on an engine side or an outer shell of a torque converter as an example of the power transmitting apparatus 17.

The elastic member 3 is, for example, a coil spring, and at least two elastic members 3 are arranged. It is preferable that at least two elastic members 3 is arranged point-symmetrically about a center in an internal combustion engine rotation direction 10 from the viewpoint of balancing their respective biasing forces. As an example, four elastic members 3 are arranged at intervals of 90 degrees as shown in Fig. 1A. The elastic member 3 is attached to between a first support portion 1b having a recessed shape of the starting apparatus side member 1 and a second support portion 2b having a recessed shape of the internal combustion engine side member 2 to have a biasing force for applying a bias in the internal combustion engine rotation direction 10 (for example, in a counterclockwise direction in Figs. 1A, 2, and the like). The first support portion 1b and the second support portion 2b are positioned facing each other along the internal combustion engine rotation direction 10.

The internal combustion engine side member 2 is provided with the stopper portions 2c.

The contact portion 1c of the starting apparatus side member 1 is disposed behind the stopper portion 2c of the internal combustion engine side member 2 in the internal combustion engine rotation direction 10 and is capable of forming the gap 12 relative to the stopper portion 2c of the internal combustion engine side member 2 when the starting apparatus side member 1 rotates in a direction opposite to the internal combustion engine rotation direction 10 and coming into contact with the stopper portion 2c of the internal combustion engine side member 2 when the starting apparatus side member 1 rotates in the internal combustion engine rotation direction 10. An interval dimension of the gap 12 is determined in advance by design considering the biasing force applied to the internal combustion engine side member 2 and a mechanical strength at the time of contraction of the elastic member 3, and the like.

More specifically, the following structure has been adopted.

The starting apparatus side member 1 has a plurality of first protrusions 1a having an L-shape protruding at certain angular intervals (for example, 90° intervals) from a first outer circumferential frame portion 1d that is an annular member toward a center in a radial direction. A tip of each of the first protrusions 1a having an L-shape corresponds to the contact portion 1c. A first depression 1b as the first support portion is provided on a rear side of each of the first protrusions 1a having an L-shape in the internal combustion engine rotation direction 10, and supports a front end of the elastic member 3 in the internal combustion engine rotation direction 10.

The internal combustion engine side member 2 is disposed inside the starting apparatus side member 1 to be rotatable relative to the starting apparatus side member 1, and has a plurality of second protrusions 2a having an L-shape protruding at certain angular intervals (for example, 90° intervals) outward from a second outer circumferential frame portion 2d that is an annular member in the radial direction. An outer circumferential surface in the radial direction of a tip of each of the second protrusions 2a having an L-shape is slidable on an inner circumferential surface in the radial direction of the first outer circumferential frame portion 1d to allow the second protrusion 2a to move relative to the first outer circumferential frame portion 1d. A second depression 2b as the second support portion is provided on a front side of each of the second protrusions 2a having an L-shape in the internal combustion engine rotation direction 10, and supports a rear end of the elastic member 3 in the internal combustion engine rotation direction 10.

The stopper portion 2c protruding outward in the radial direction is formed on the second outer circumferential frame portion 2d ahead of each of the second protrusions 2a in the internal combustion engine rotation direction 10. When each of the stopper portions 2c allows the contact portion 1c of the starting apparatus side member 1 to come into contact and engage therewith, and the contact portion 1c engages with the stopper portion 2c, the starting apparatus side member 1 and the internal combustion engine side member 2 integrally rotate in the internal combustion engine rotation direction 10. On the other hand, rotation in a direction opposite to the internal combustion engine rotation direction 10 against the biasing force of the elastic member 3 allows the contact portion 1c to separate from the stopper portion 2c to form the relative gap 12. At this time, the contact portion 1c having an inner surface in the radial direction slidable on the outer circumferential surface of the second outer circumferential frame portion 2d allows the contact portion 1c to guide to move relative to the second outer circumferential frame portion 2d.

Note that it is preferable that at least two contact portions 1c of the starting apparatus side member 1 and at least two stopper portions 2c of the internal combustion engine side member 2 are arranged, and it is preferable that these portions are arranged point-symmetrically about the center of the internal combustion engine rotation direction 10 from the viewpoint of a balance.

In such a configuration, when the starting apparatus side member 1 rotates in a direction opposite to the internal combustion engine rotation direction 10 by a predetermined angle to temporally contract all the elastic members 3 to increase the biasing force, and then rotates in the internal combustion engine rotation direction 10, a combination of the rotation of the starting apparatus side member 1 in the internal combustion engine rotation direction 10 with rotation in the internal combustion engine rotation direction 10 caused by the biasing force of the elastic members 3 brings the contact portions 1c of the starting apparatus side member 1 into contact with the stopper portions 2c of the internal combustion engine side member 2 to cause the starting apparatus side member 1 to rotate integrally with the internal combustion engine side member 2 in the internal combustion engine rotation direction 10. As an example, an angle range for the reverse rotation is determined in advance by design considering the biasing force applied to the internal combustion engine side member 2 and the mechanical strength at the time of contraction of the elastic member 3, and the like. Macroscopically, the internal combustion engine side member 2 does not rotate due to large resistance torque, allowing the gap 12 and a contraction angle of the elastic member 3 to be approximately identical to each other.

Therefore, for example, under a condition such as at an extremely low temperature ranging from, for example, -20°C to -30°C where torque required for starting the engine 13 increases, when static torque that the starting apparatus of the engine 13 can generate is below the torque required for starting the engine 13, the use of the configuration of the first embodiment makes it possible to additionally apply dynamic torque to the engine 13 and thus increase starting performance of the engine 13.

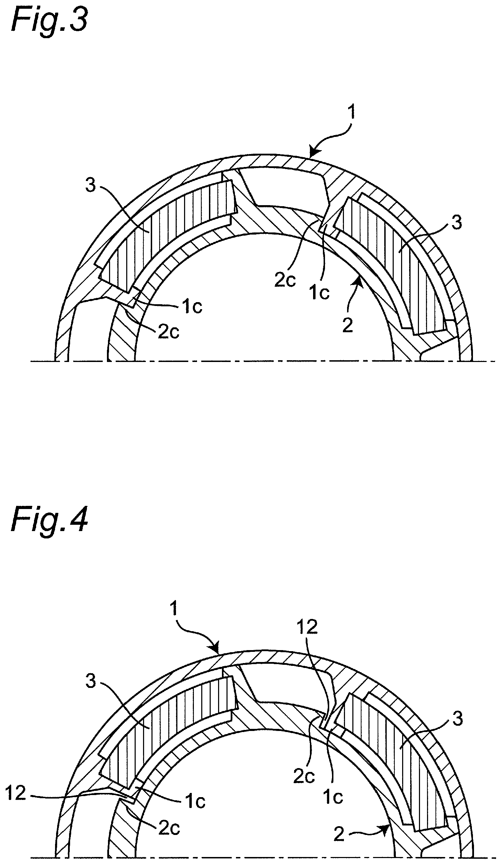

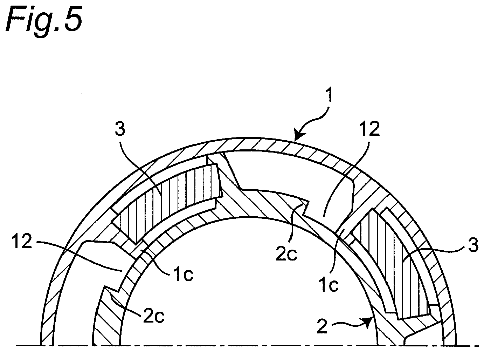

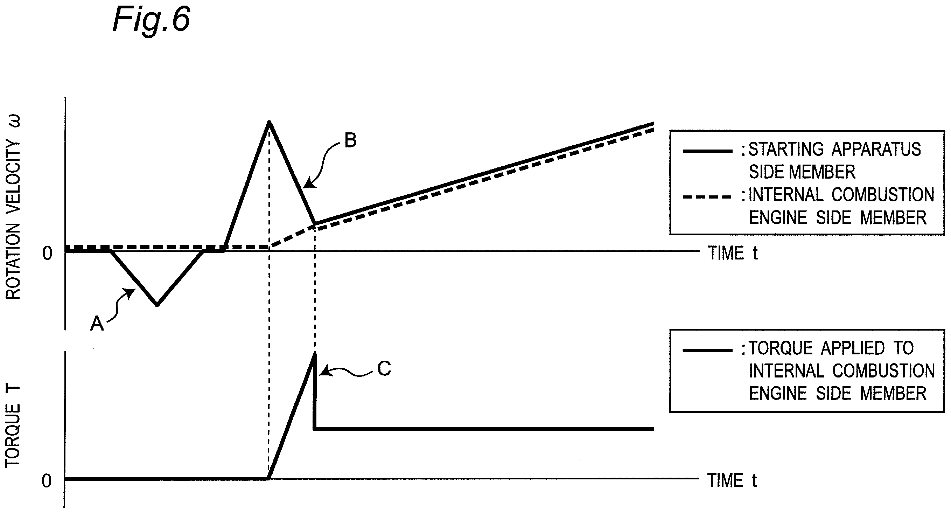

A more specific effect will be described below with reference to Figs. 3 to 5. Fig. 6 is a schematic operation time chart.

The internal combustion engine side member 2 and the starting apparatus side member 1 shown in Figs. 3 to 5 are rotatable relative to each other by the gap 12 that can be relatively formed between the stopper portion 2c and the contact portion 1c, that is, within a certain angle range in a circumferential direction, with their respective protrusions, that is, the first protrusion 1a and the second protrusion 2a, prevented from moving in the radial direction between an inner circumferential surface of the starting apparatus side member 1 and an outer circumferential surface of the internal combustion engine side member 2.

This rotation in the circumferential direction is restricted by the biasing force of each of the elastic members 3 and the contact of each of the contact portions 1c with each of the stopper portions 2c.

As described above, under the condition such as in a cold state where the torque required for starting the engine 13 increases, firstly, the starting apparatus is temporally rotated by a certain angle range in a direction (reverse rotation direction) opposite to a normal rotation direction 10 of the engine 13 (refer to A in Fig. 6) in the order shown in Figs. 3, 4, and 5.

At this time, since large resistance torque acts on the engine 13 in the reverse rotation direction similar to the normal rotation direction (internal combustion engine rotation direction) 10, the internal combustion engine side member 2 hardly rotates from a macroscopic viewpoint. Therefore, the relative rotation between the starting apparatus side member 1 and the internal combustion engine side member 2 compresses the elastic members 3 to store energy. At this time, each of the contact portions 1c is separated from each of the stopper portions 2c in the circumferential direction, and the gap 12 is formed therebetween.

Next, when the starting apparatus is shifted from the rotation in the reverse rotation direction to the rotation in the normal rotation direction 10 (see B in Fig. 6), the rotation of the starting apparatus side member 1 in the normal rotation direction 10 is accelerated with total torque that results from adding up torque in the normal rotation direction 10 generated by the starting apparatus and torque generated by release of the energy stored in the elastic member 3 (see Fig. 6C).

Furthermore, when the starting apparatus side member 1 continues to rotate in the normal rotation direction 10, the contact portions 1c of the starting apparatus side member 1 come into contact with the stopper portions 2c of the internal combustion engine side member 2 that is not moving, and the rotation of the starting apparatus side member 1 is rapidly decelerated. At this time, each of the contact portions 1c comes into contact with each of the stopper portions 2c to make the gap 12 therebetween disappear, and the starting apparatus side member 1 and the internal combustion engine side member 2 start to rotate integrally.

In this rapid deceleration, the torque in the normal rotation direction 10 equivalent to all inertia moments of members that rotates integrally with the starting apparatus side member 1 acts on the internal combustion engine side member 2.

Here, the following relational expression is satisfied.

[Expression 1]

$$T = I\ddot{w}$$

[Expression 2]

T: torque acting on internal combustion engine side member 2
I: all inertia moments of members that rotates integrally with starting apparatus side member 1
w: deceleration of starting apparatus side member 1

After the rapid deceleration, the torque generated by the starting apparatus itself drives the internal combustion engine side member 2 in the normal rotation direction 10 with the contact portions 1c of the starting apparatus side member 1 and the stopper portions 2c of the internal combustion engine side member 2 kept in contact with each other.

As described above, in the first embodiment, the relative gaps 12 and the coil springs 3 are arranged between the starting apparatus side member 1 connected to the rotary electrical machine 16 and the internal combustion engine side member 2 connected to the engine 13 along the rotation direction. When the starting apparatus side member rotates in a direction opposite to the internal combustion engine rotation direction 10 by a predetermined angle to temporally form the gaps 12 and contract the elastic members 3 and then rotates in the internal combustion engine rotation direction 10, the contact portions 1c of the starting apparatus side member 1 are brought into contact with the stopper portions 2c of the internal combustion engine side member 2, and a combination of the rotation of the starting apparatus side member 1 in the internal combustion engine rotation direction 10 with the rotation in the internal combustion engine rotation direction 10 caused by the biasing force of the elastic members 3 causes the starting apparatus side member 1 to rotate integrally with the internal combustion engine side member 2 in the internal combustion engine rotation direction 10. As described above, the use of the torque generated by the biasing force of the coil springs 3 makes it possible to obtain torque equal to or greater than the static torque of the rotary electrical machine 16 and start the engine. As a result, it is possible to use a dynamic torque of an internal combustion engine starting apparatus, and compared with a case where only the static torque is used, it is possible to reliably transmit, without a V-belt and a pulley, a rotational driving force of the rotary electrical machine 16 to the engine 13 even in a cold state, specifically, at an extremely low temperature ranging from, for example, -20°C to -30°C and thus reliably start the engine 13.

This makes it possible to reduce the size of the starting apparatus and to ensure a reliable start even under a condition such as at an extremely low temperature where the torque required for the start increases, which eliminates the need for both an ISG and a starter that are necessary in conventional arts because of concern about slippage of a V-belt, and thus makes it possible to bring about advantages in terms of a cost reduction and an increase in space efficiency due to a reduction in the number of parts.

Note that the present invention is not limited to the embodiment and may be implemented in various other modes. For example, the elastic member 3 is not limited to the coil spring and may have the following configuration.

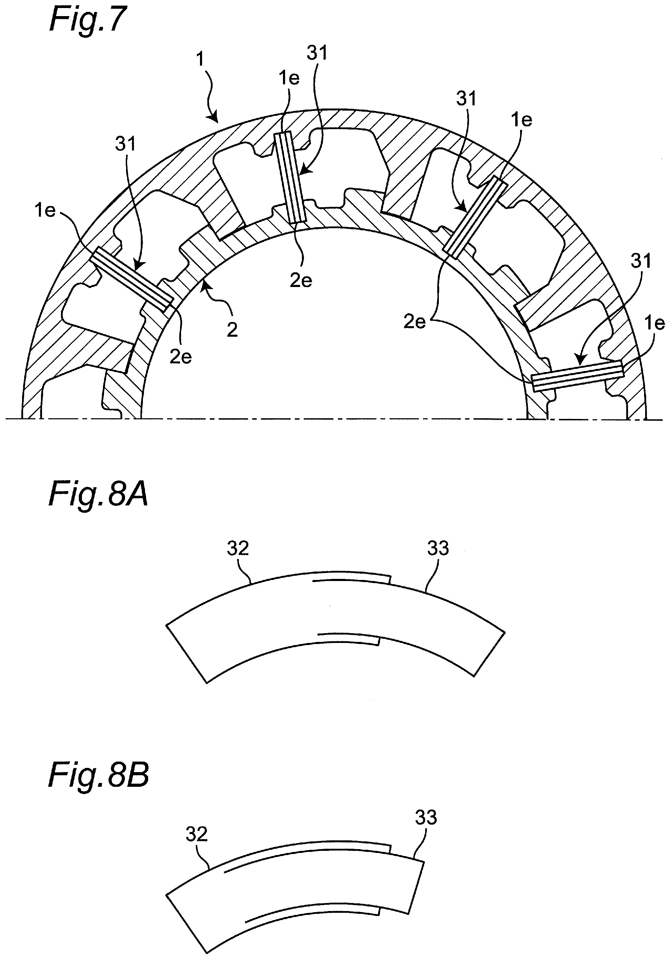

As shown in Fig. 7, as a modification, the elastic members 3 may be constructed as a plurality of leaf springs 31 that are stacked and disposed between a first inner circumferential side support portion 1e and a second outer circumferential side support portion 2e along the radial direction. The first inner circumferential side support portion 1e and the second outer circumferential side support portion 2e are provided on the inner circumferential side of the first outer circumferential frame portion 1d of the starting apparatus side member 1 and on the outer circumferential side of the second outer circumferential frame portion 2d of the internal combustion engine side member 2, respectively. In this example, contracting the elastic members 3 described above corresponds to bending the leaf springs 31 by twist. This example acts in the same way as in the first embodiment. This example brings about an advantage that a twist angle is smaller than a twist angle of the coil spring, but in a case where a small twist angle is allowed in terms of design, an occupied volume as the elastic members 3 can be made smaller.

As shown in Figs. 8A and 8B, the elastic member 3 may be constructed as a cylinder 32 in which a compressive fluid is sealed, and a piston 33 that moves forward and backward in the cylinder 32. The cylinder 32 and the piston 33 are supported between the first depression 1b and the second depression 2b. A seal is applied to between the cylinder 32 and the piston 33 to prevent the fluid from leaking. Figs. 8A and 8B show states in which the compressive fluid is sealed in. Fig. 8A shows a case where the compressive fluid is sealed in, and an internal pressure is low in a stretched state. Fig. 8B shows a case where the compressive fluid is sealed in, and the internal pressure is increased in a contracted state. This example acts in the same way as in the first embodiment. Further, this example allows an elastic modulus to be freely changed in accordance with a filling amount of the compressive fluid, which brings about an advantage that application design is easy.

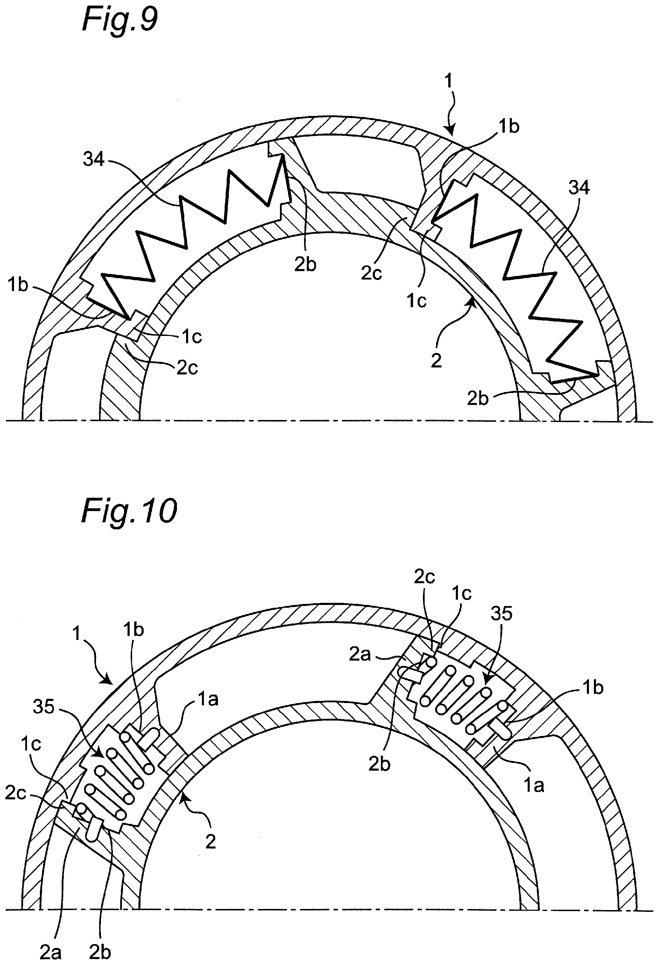

As shown in Fig. 9, the elastic member 3 may be constructed as an accordion spring 34 supported between the first depression 1b and the second depression 2b. This example acts in the same way as in the first embodiment.

As shown in Fig. 10, the elastic member 3 may be constructed as a tension spring 35 supported between the first depression 1b and the second depression 2b. The stopper portion 2c is disposed at an outer end in the radial direction of each of the plurality of second protrusions 2a having an L-shape, and the contact portion 1c is disposed at an inner end in the radial direction of each of the plurality of first protrusions 1a having an L-shape. The tension spring 35 is attached to between the first support portion 1b having a recessed shape of the starting apparatus side member 1 and the second support portion 2b having a recessed shape of the internal combustion engine side member 2 to have a biasing force for applying a bias in the internal combustion engine rotation direction 10 (for example, in a counterclockwise direction in Fig. 10). The first support portion 1b and the second support portion 2b are positioned, on a front side and a rear side, respectively, facing each other along the internal combustion engine rotation direction 10. This example acts in the same way as in the first embodiment. This example makes it possible to prevent the spring member from becoming friction-wear due to a centrifugal force.

Further, similar to Fig. 1A, the elastic member 3 may be constructed as a columnar rubber elastic body.

By appropriately combining arbitrary embodiments or modifications of the above various embodiments or modifications, respective effects can be produced. Additionally, combination between embodiments, combination between working examples, or combination between an embodiment(s) and a working example(s) is possible, and combination between characteristics in different embodiments or working examples is possible as well.

Although the present invention has been fully described in connection with the embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

INDUSTRIAL APPLICABILITY

The internal combustion engine start assist mechanism according to the present invention is capable of reliably transmitting, without a V-belt and a pulley, a rotational driving force of the starting apparatus to the internal combustion engine even in a cold state, specifically, under a condition such as at an extremely low temperature ranging from, for example, -20°C to -30°C and thus reliably starting the internal combustion engine in the cold state, and is applicable to, for example, a power transmitting apparatus with rotary electrical machine that integrates a power generating function and an engine start function of a vehicle's alternator and a vehicle's starter motor.

REFERENCE SIGNS LIST

1. starting apparatus side member
1a. first protrusion
1b. first depression (an example of first support portion)
1c. contact portion
1d. first outer circumferential frame portion
1e. first inner circumferential side support portion
2. internal combustion engine side member
2a. second protrusion
2b. second depression (an example of second support portion)
2c. stopper portion
2d. second outer circumferential frame portion
2e. second outer circumferential side support portion
3. elastic member
10. internal combustion engine rotation direction
12. gap
13. engine
14. transmission
15. output shaft
16. rotary electrical machine
17. power transmitting apparatus
20. internal combustion engine start assist mechanism
31. leaf spring
32. cylinder
33. piston
34. accordion spring
35. tension spring

**Claims**

1.   An internal combustion engine start assist mechanism comprising:

an elastic member that is attached to between a first support portion of a starting apparatus side member and a second support portion of an internal combustion engine side member respectively positioned along an internal combustion engine rotation direction and has a biasing force for applying a bias in the internal combustion engine rotation direction;
a stopper portion disposed on the internal combustion engine side member that rotates integrally with an output shaft of an internal combustion engine; and
a contact portion of the starting apparatus side member disposed behind the stopper portion of the internal combustion engine side member in the internal combustion engine rotation direction, the contact portion being capable of forming a gap relative to the stopper portion of the internal combustion engine side member when the starting apparatus side member rotates in a direction opposite to the internal combustion engine rotation direction, and the contact portion coming into contact with the stopper portion of the internal combustion engine side member when the starting apparatus side member rotates in the internal combustion engine rotation direction,

when the starting apparatus side member rotates in the direction opposite to the internal combustion engine rotation direction by a predetermined angle to temporally contract the elastic member and then rotating in the internal combustion engine rotation direction, the contact portion of the starting apparatus side member being brought into contact with the stopper portion of the internal combustion engine side member, and a combination of the rotation of the starting apparatus side member in the internal combustion engine rotation direction with rotation in the internal combustion engine rotation direction caused by the biasing force of the elastic member causing the starting apparatus side member to rotate integrally with the internal combustion engine side member in the internal combustion engine rotation direction.

2.  The internal combustion engine start assist mechanism according to claim 1,
    the elastic member being a coil spring.

3.  The internal combustion engine start assist mechanism according to claim 1,
    the elastic member being a leaf spring, and contracting the elastic member corresponding to bending the leaf spring by twist.

4.  The internal combustion engine start assist mechanism according to claim 1,
    the elastic member being a columnar rubber elastic body.

5.  The internal combustion engine start assist mechanism according to claim 1,
    the elastic member including a cylinder in which a compressive fluid is sealed and a piston that moves forward and backward in the cylinder.

6.  The internal combustion engine start assist mechanism according to claim 1,
    the elastic member being an accordion spring.

7.  An internal combustion engine start assist mechanism comprising:

    a tension spring that is attached to between a first support portion of a starting apparatus side member and a second support portion of an internal combustion engine side member respectively positioned along an internal combustion engine rotation direction and has a biasing force for applying a bias in the internal combustion engine rotation direction;

a stopper portion disposed on the internal combustion engine side member that rotates integrally with an output shaft of an internal combustion engine; and

a contact portion of the starting apparatus side member disposed behind the stopper portion of the internal combustion engine side member in the internal combustion engine rotation direction, the contact portion being capable of forming a gap relative to the stopper portion of the internal combustion engine side member when the starting apparatus side member rotates in a direction opposite to the internal combustion engine rotation direction, and the contact portion coming into contact with the stopper portion of the internal combustion engine side member when the starting apparatus side member rotates in the internal combustion engine rotation direction,

when the starting apparatus side member rotates in the direction opposite to the internal combustion engine rotation direction by a predetermined angle to temporally stretch the tension spring and then rotating in the internal combustion engine rotation direction, the contact portion of the starting apparatus side member being brought into contact with the stopper portion of the internal combustion engine side member, and a combination of the rotation of the starting apparatus side member in the internal combustion engine rotation direction with rotation in the internal combustion engine rotation direction caused by the biasing force of the tension spring causing the starting apparatus side member to rotate integrally with the internal combustion engine side member in the internal combustion engine rotation direction.

*Fig.1A*

*Fig.1B*

*Fig.2*

*Fig.3*

*Fig.4*

Fig.5

Fig.6

EP 3 564 521 A1

Fig.7

Fig.8A

Fig.8B

## Fig.9

## Fig.10

*Fig.11*

## INTERNATIONAL SEARCH REPORT

| International application No. |
| --- |
| PCT/JP2018/003143 |

**A. CLASSIFICATION OF SUBJECT MATTER**
Int.Cl. F02N11/00(2006.01)i, B60K6/36(2007.10)i, B60K6/40(2007.10)i, B60K6/485(2007.10)i, B60K6/54(2007.10)i, F02N5/02(2006.01)i, F02N15/02(2006.01)i

According to International Patent Classification (IPC) or to both national classification and IPC

**B. FIELDS SEARCHED**

Minimum documentation searched (classification system followed by classification symbols)
Int.Cl. F02N11/00, B60K6/36, B60K6/40, B60K6/485, B60K6/54, F02N5/02, F02N15/02

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2011-174429 A (AISIN SEIKI) 08 September 2011 & US 2012/0234282 A1 & WO 2011/105240 A1 & EP 2541041 A1 & CN 102792010 A | 1–7 |
| A | JP 6-280720 A (ROBERT BOSCH GMBH) 04 October 1994 & US 5533415 A & GB 2274684 A & DE 4302854 C & FR 2701064 A | 1–7 |

☒ Further documents are listed in the continuation of Box C.    ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 11.04.2018 | 24.04.2018 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
|---|
| PCT/JP2018/003143 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2005-299581 A (KYOSHO CORP.) 27 October 2005<br>& US 2005/0229728 A1 | 1-7 |
| A | JP 4782348 B2 (VALEO EQUIPEMENTS ELECTRIQUES MOTEUR)<br>28 September 2011<br>& JP 2003-527061 A & US 2002/0158523 A1 & WO 2001/069762<br>A1 & FR 2806223 A1 | 1-7 |
| A | JP 4787242 B2 (VALEO EQUIPEMENTS ELECTRIQUES MOTEUR)<br>05 October 2011<br>& JP 2007-535890 A & WO 2005/117244 A1 & DE 112005000419<br>T & FR 2870055 A1 | 1-7 |
| A | JP 2009-508464 A (VALEO EQUIPEMENTS ELECTRIQUES MOTEUR)<br>26 February 2009<br>& US 2009/0184601 A1 & WO 2007/031679 A2 & FR 2890798<br>A1 | 1-7 |

Form PCT/ISA/210 (continuation of second sheet) (January 2015)

**EP 3 564 521 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4782348 B
- JP 4787242 B
- JP 2009508464 A